# EUROPEAN PATENT APPLICATION

(11) **EP 1 320 040 A2**
(43) Date of publication of application: **18.06.2003**
(21) Application number: 02027630.9
(22) Date of filing: 11.12.2002
(51) Int. Cl.: G06F 17/30

(54) **System, apparatus, method and program for automatic correction of URL link destinations**

(30) Priority: 11.12.2001 JP 2001377225
(71) Applicant: Pioneer Corporation, Meguro-ku, Tokyo (JP)
(72) Inventor: Suzuki, Yukimasa, Tokorozawa Koujou, Tokorozawa-shi, Saitama-ken 359-8522 (JP); Ichimura, Masami, Tokorozawa Koujou, Tokorozawa-shi, Saitama-ken 359-8522 (JP); Kodaira, Satoru, Tokorozawa Koujou, Tokorozawa-shi, Saitama-ken 359-8522 (JP); Furuta, Hirotaka, Tokorozawa Koujou, Tokorozawa-shi, Saitama-ken 359-8522 (JP)
(74) Representative: Popp, Eugen, Dr.

(57) **Abstract**

An automatic URL link destination correcting system is provided to ensure an access to a Web site (19) even when the URL has been moved to a new location. When an automatic URL link destination correcting apparatus (12a) attempts to access a Web site (19) based on information recorded in an information recording medium (DISC), such as a CD or a DVD, it sends URL data designating the URL of the Web site (19)or site identifying data related to the Web site (19) recoded in the information recording medium (DISC) to a URL managing server (18) managing URLs of Web sites (19). The URL managing server (18) then searches through the URLs of the Web sites (19) it manages, and judges whether the URL corresponding to the URL data or the site identifying data has been moved to a new location. When it is judged that the URL has been moved to the new location, it returns updated URL data designating a URL indicating the new location. The automatic URL link destination correcting apparatus 12a accesses the Web site (19) based on the returned updated URL data, and for example, makes a request for distribution of related information about the contents recorded in the information recording medium (DISC).

## Description

### BACKGROUND OF THE INVENTION

The present invention relates to an automatic URL link destination correcting system for, when a URL (Universal Resource Locator) indicating the location of a given object on the Internet has been moved to a new location, automatically correcting the URL to a URL indicating the new location.

The present application claims priority from Japanese Application No.2001-377225, the disclosure of which is incorporated herein by reference for all purposes.

The widespread use of the Internet in recent years enables us to readily and speedily obtain a large variety of contents, such as music, images, and text data, through an electronic device with communications capability, such as a personal computer (PC), and has brought about a revolution in our daily life.

For instance, the user accesses a home page through the WWW (World Wide Web) browser or the like, then he/she can obtain desired contents readily and speedily by merely specifying a Web site on which the contents are located with a URL.

However, URLs may be moved to new locations according to the convenience of the Web sites. This raises problems that the user can no longer obtain the desired contents because it is not easy for the user to find out a URL indicting the new location, and should he/she find out the URL indicating the new location, he/she has to input the URL indicating the new location on the Web browser by hand from the start, which undesirably complicates the manipulations.

### SUMMARY OF THE INVENTION

The invention is devised in view of the foregoing problems, and has an object to provide an automatic URL link destination correcting system, an automatic URL link destination correcting apparatus, and a method of automatically correcting a URL link destination, each capable of correcting a given URL to a URL indicating a new location when the URL has been moved to the new location, and an automatic URL link destination correcting program causing an electronic device equipped with a computer to automatically correct a given URL to a URL indicating the new location.

In order to achieve the above and other objects, an automatic URL link destination correcting system of the invention includes URL managing device having a database for managing URLs of Web sites, and automatic URL link destination correcting device. The automatic URL link destination correcting device obtains one of URL data designating a URL of a Web site and site identifying data related to the Web site recorded in an information recording medium and sends the obtained data to the URL managing device. Upon receipt of the one of the URL data and the site identifying data from the automatic URL link destination correcting device, the URL managing device judges whether the URL of the Web site corresponding to the one of the URL data and the site identifying data has been moved to a new location by searching through the database. Upon judging that the URL of the Web site has been moved to the new location, it returns updated URL data designating a URL indicating the new location to the automatic URL link destination correcting device, and the automatic URL link destination correcting device accesses the Web site based on the updated URL data returned from the URL managing device.

Instead of returning the updated URL data to the automatic URL link destination correcting device, the URL managing device may access the Web site based on the updated URL data and notify the Web site of an access request from the automatic URL link destination correcting device.

Also, upon obtainment of the one of the URL data and the site identifying data recorded in the information recording medium, the automatic URL link destination correcting device may attempt to access the Web site based on the URL data before sending the one of the URL data and the site identifying data to the URL managing device, and when an access to the Web site fails, it sends the one of the URL data and the site identifying data to the URL managing device.

In order to achieve the above and other objects, an automatic URL link destination correcting apparatus of the invention includes control device for obtaining one of URL data designating a URL of a Web site and site identifying data related to the Web site recorded in an information recording medium, sending the one of the URL data and the site identifying data to URL managing device having a database for managing URLs of Web sites, and causing the URL managing device to judge whether the URL of the Web site corresponding to the one of the URL data and the site identifying data has beenmoved to a new location by a search through the database, and upon judging that the URL of the Web site has been moved to the new location, to return updated URL data designating a URL indicating the new location. Then, the control device accesses the Web site based on the updated URL data returned from the URL managing device.

Instead of causing the URL managing device to return the updated URL data, the control device may cause the URL managing device to access the Web site based on the updated URL data and notify the Web site of an access request from the control device.

Also, upon obtainment of the one of the URL data and the site identifying data recorded in the information recording medium, the control device may attempt to access the Web site based on the URL data before sending the one of the URL data and the site identifying data to the URL managing device, and when an access to the Web site fails, it sends the one of the URL data and the site identifying data to the URL managing device.

In order to achieve the above and other objects, a method of automatically correcting a URL link destination of the invention includes: a first step of sending one of URL data designating a URL of a Web site and site identifying data related to the Web site recorded in an information recording medium to URL managing device having a database for managing URLs of Web sites; a second step of causing the URL managing device to judge whether the URL of the Web site corresponding to the one of the URL data and the site identifying data has been moved to a new location by a search through the database, and upon judging that the URL of the Web site has been moved to the new location, to search for updated URL data designating a URL indicating the new location; and a third step of accessing the Web site based on the updated URL data searched by the URL managing device.

Also, in the third step, instead of making an access to the Web site based on the updated URL data searched by the URL managing device, the URL managing device may be caused to access the Web site based on the searched updated URL data.

Also, an attempt may be made to access the Web site based on the URL data prior to the first step, and when an access to the Web site fails, the first step is initiated.

In order to achieve the above and other objects, an automatic URL link destination correcting program of the invention is an automatic URL link destination correcting program for causing a computer to access a Web site based on information recorded in an information recording medium. The program causes the computer to perform: a first procedural step of sending one of URL data designating a URL of a Web site and site identifying data related to the Web site recorded in the information recording medium to URL managing device having a database for managing URLs of Web sites; a second procedural step of causing the URL managing device to judge whether the URL of the Web site corresponding to the one of the URL data and the site identifying data has been moved to a new location by a search through the database, and upon judging that the URL of the Web site has been moved to the new location, to search for updated URL data designating a URL indicating the new location; and a third procedural step of accessing the Web site based on the updated URL data searched by the URL managing device.

Also, in the third procedural step, instead of making an access to the Web site based on the updated URL data searched by the URL managing device, the URL managing device may be caused to access the Web site based on the searched updated URL data.

Also, the program may cause the computer to further perform a procedural step of making an attempt to access the Web site based on the URL data prior to the first procedural step, and when an access to the Web site fails, the first procedural step is initiated.

### BRIEF DESCRIPTION OF THE DRAWINGS

These and other objects and advantages of the present invention will become clear from the following description with reference to the accompanying drawings, wherein:
Fig. 1 is a view showing a configuration of an automatic URL link destination correcting apparatus of one embodiment of the invention;
Fig. 2 is a view showing a basic configuration of an automatic URL link destination correcting system of one embodiment of the invention;
Fig. 3 is a flowchart detailing operations of the automatic URL link destination correcting apparatus of Fig. 1 and the automatic URL link destination correcting system of Fig. 2; and
Fig. 4 is a flowchart detailing operations of an automatic URL link destination correcting apparatus and an automatic URL link destination correcting system according to a modification of the embodiment.

### DETAILED DESCRIPTION OF THE PREFERRED EMBODIMENTS

The following description will describe a preferred embodiment of the invention with reference to the accompanying drawings. As a preferred embodiment, an explanation will be given to an automatic URL link destination correcting apparatus incorporated in an information playback apparatus for reading out and playing back information recorded in a CD (Compact Disc) or a DVD (Digital Versatile Disc), and another explanation will be given to an automatic URL link destination correcting system, a method of automatically correcting a URL link destination, and an automatic URL link destination correcting program in association with the information playback apparatus.

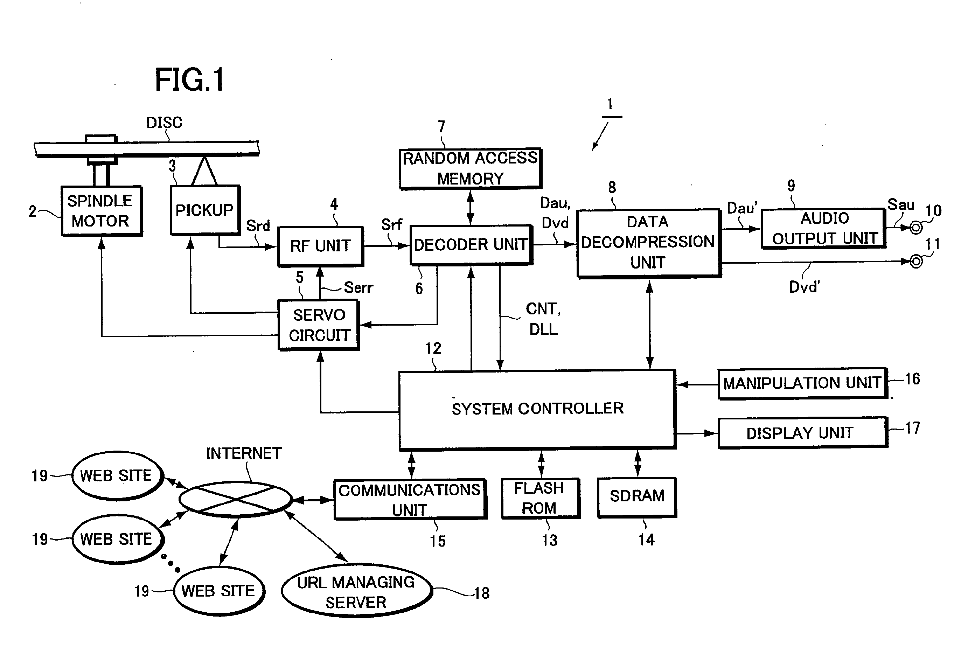

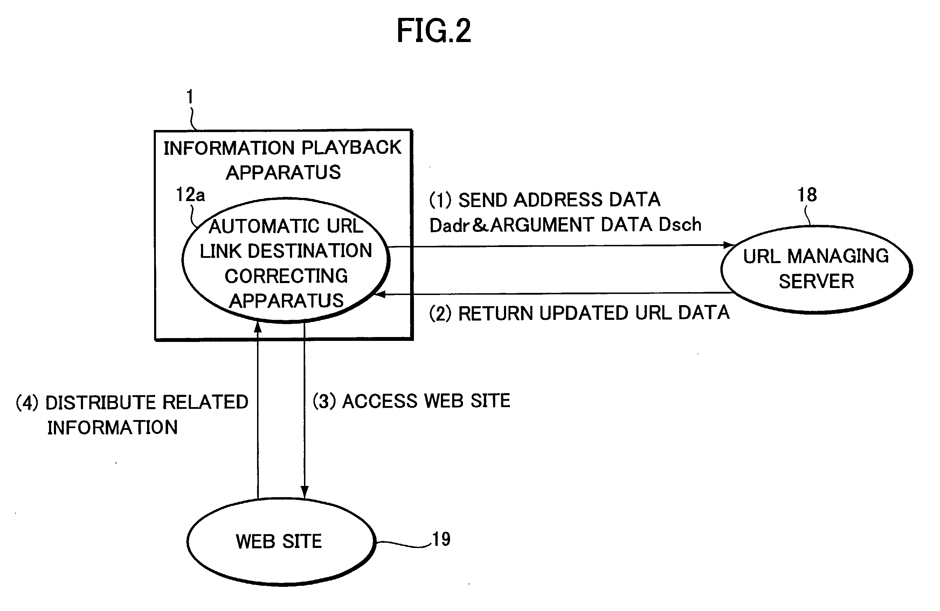

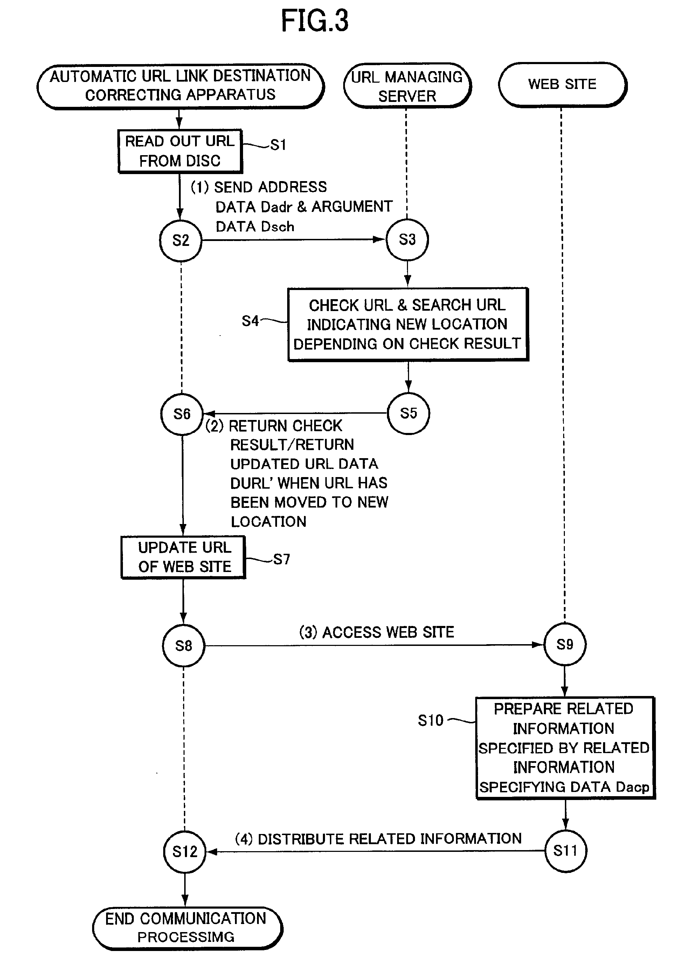

Fig. 1 is a block diagram showing a configuration of an information playback apparatus incorporating an automatic URL link destination correcting apparatus. Figs. 2 and 3 are views explaining operations of the automatic URL link destination correcting apparatus and the information playback apparatus.

Referring to Fig. 1, an information playback apparatus 1 is provided with a spindle motor 2 for driving a loaded information recording medium (hereinafter, referred to as a disc), such as a CD or a DVD, at a certain linear velocity, a pickup 3 for optically reading out information recorded in the disc, an RF unit 4, and a servo circuit 5.

The RF unit 4 generates an RF signal Srf from a read signal Srd outputted from the pickup 3, and further, it generates an error signal Serr containing error information, such as a focus error and a tracking error, from the read signal Srd.

The servo circuit 5 effects accurate information reading by servo-controlling operations of the spindle motor 2 and the pickup 3, based on the error signal Serr outputted from the RF unit 4 and a synchronization signal (symbol is omitted) supplied from a decoder unit 6 which will be described below.

Further, the information playback apparatus 1 is provided with the decoder unit 6, a random access memory 7, a data decompression unit 8, an audio output unit 9, a system controller 12, a flash ROM 13, an SDRAM 14, a communications unit 15, a manipulation unit 16, and a display unit 17.

The decoder unit 6 generates audio stream data Dau and video stream data Dvd by applying decoding processing to the RF signal Srf outputted from the RF unit 4 in conformity with the CD and DVD standards. The decoder unit 6 then separates, extracts, and outputs the audio stream data Dau and the video stream data Dvd to the data decompression unit 8, where each undergoes corresponding playback processing separately.

In addition to the aforementioned audio stream data Dau and video stream data Dvd, the decoder unit 6 further decodes the RF signal Srf into control data CNT for playback control and overhead data DLL described below and supplies both to the system controller 12.

To be more specific, when a CD is played, the decoder unit 6 generates the control data CNT and the overhead data DLL by decoding, separating, and extracting the playback control data, such as TOC (Table of Contents) information and attribute data, recorded in the CD. Then, the decoder unit 6 generates the audio stream data Dau and the video stream data Dvd by performing the aforementioned decoding processing according to the control data CNT, and further, it supplies the system controller 12 with the control data CNT together with the overhead data DLL.

When a DVD is played, the decoder unit 6 generates the control data CNT and the overhead data DLL by decoding, separating, and extracting the playback control data, such as video manager information (VMGI), video title set information (VTSI), and program chain information (PGCI), recorded in the DVD.
Then, the decoder unit 6 generates the audio stream data Dau and the video stream data Dvd by performing the aforementioned decoding processing according to the control data CNT, and supplies the system controller 12 with the control data CNT together with the overhead data DLL.

The overhead data DLL contains disc identifying information unique to an individual disc and contents identifying information indicating titles of the songs recorded in the disc and the name of the artist, and such identifying information is pre-recorded as related information specifying data Dacp by being contained in the TOC information or the attribute data in the case of a CD, and by being contained in the video manager information or the video title set information in the case of a DVD.

Besides the aforementioned related information specifying data Dacp, the overhead data DLL further contains URL data DURL designating the location (address) itself of a Web site, or site identifying data Did related to the location of the Web site. Such data is pre-recorded by being contained in the TOC information or the attribute data in the case of a CD, and by being contained in the video manager information or the video title set information in the case of a DVD.

The URL data DURL is the data which directly designates the location of a Web site. On the contrary, the site identifying data Did is the data which designates the location of a Web site in the form of the identifying information correlated with the URL data DURL. For example, identification numbers or identification labels uniquely assigned to individual Web sites to distinguish one Web site from another are used as the site identifying data Did.

When the audio stream data Dau or the video stream data Dvd is the data compressed through a certain compression method (for example, MPEG method), the data decompression unit 8 generates non-compressed audio data Dau' or non-compressed video data Dvd' by applying decompression processing corresponding to the compression method to the data Dau or Dvd at a command from the system controller 12. The data decompression unit 8 then outputs the non-compressed audio data Dau' to a sound output terminal 10 through the audio output unit 9, and the non-compressed video data Dvd' to a video output terminal 11.

When the audio stream data Dau or the video stream data Dvd is not compressed, the data decompression unit 8 outputs either data intact without applying the decompression processing.

The system controller 12 judges whether the audio stream data Dau or the video stream data Dvd is compressed based on the information indicating the compression method contained in the control data CNT.

The audio output unit 9 is provided with a digital-to-analog converter for converting the audio data Dau' into an analog sound signal Sau according to a predetermined sampling frequency. The audio output unit 9 amplifies the power of the converted analog sound signal Sau and outputs the amplified signal to the sound output terminal 10.

As has been described, the decoder unit 6, the data decompression unit 8, and the audio output unit 9 play the sound information or the video information recorded in a disc, and music can be played through a speaker (not shown) connected to the sound output terminal 10 and images can be displayed on a monitor (not shown) connected to the video output terminal 11.

The system controller 12 is composed of a microprocessor (MPU) furnished with computing and controlling functions. By running a pre-installed system program on the microprocessor, the system controller 12 controls an operation of the overall information playback apparatus 1 and performs control in automatically correcting a URL link destination.

In other words, the automatic URL link destination correcting apparatus of the embodiment incorporated in the information playback apparatus 1 is composed of control means, which is chiefly achieved through the firmware, for automatically correcting a URL link destination, and the communications unit 15 and the like controlled by the control means, which will be described below.

Further, the system controller 12 is connected to the non-volatile flash ROM 13 and the SDRAM 14 in a detachable manner, and is also connected to the communications unit 15, such as a modem linked to the Internet, the manipulation unit 16 the user manipulates, and the display unit 17 composed of a liquid crystal display or an electroluminescence display.

The flash ROM 13 and the SDRAM 14 are connected to the system controller 12 as storage media for storing various data distributed and downloaded from a Web site 19.

Thus, when the system controller 12 is connected to both or at least one of the flash ROM 13 and the SDRAM 14, it is possible to store related information distributed from a Web site 19, which will be described below, and the overhead data DLL read out from the disc.

In other words, the information playback apparatus 1 is provided with memory slots in conformity with both the flash ROM standards and the SDRAM standards, which allows the user to choose and insert either the flash ROM 13 or the SDRAM 14 into the corresponding slot, so as to be connected with the system controller 12.

The manipulation unit 16 is provided with generally known manipulation keys manipulated when a disc is played, such as a playback start key, a playback stop key, and a pause key, plus communications manipulation keys (not shown) manipulated when the user wishes to access a Web site where various contents are present or a server, by himself through the Internet.

The display unit 17 displays the Web browser contained in the system program at a command from the system controller 12. Then, the system controller 12 accesses a URL managing server 18 and many Web sites 19 present on the Internet based on the URL set in the displayed Web browser.

Next, the following description will describe operations of the automatic URL link destination correcting apparatus with reference to Figs. 2 and 3.

Fig. 2 shows a state when the automatic URL link destination correcting apparatus (hereinafter, denoted by alpha-numeral 12a) achieved chiefly by the system controller 12 in the information playback apparatus 1 is allowed to access the URL managing server 18 and many Web sites 19 present on the Internet as the communications unit 15 connected to the system controller 12 is linked to the Internet. Also, the drawing shows an example case including the automatic URL link destination correcting apparatus 12a and the URL managing server 18 as well as one of many Web sites 19 as a representative, which is a basic configuration of an automatic URL link destination correcting system of the embodiment.

Fig. 3 is a flowchart detailing operations among three parties shown in Fig. 2: the automatic URL link destination correcting apparatus 12a, the URL managing server 18, and the Web site 19.

Referring to Fig. 2, the URL managing server 18 is a database server which stores URLs as address information of many Web sites 19 and manages the URLs as the URL database.

Further, the URL managing server 18 constantly checks whether URLs of the Web sites 19 have been moved to new locations, and when it finds a Web site whose URL has been moved to a new location, it manages the URL of the Web site before it was moved as history data, and manages the URL indicating the new location by adding to the database. Further, the URL managing server 18 manages the URL before it was moved and the URL indicating the new location in a one-to-one correspondence.

Related information of a disc owned by the user is provided when the three parties including the automatic URL link destination correcting apparatus 12a, the URL managing server 18, and the Web site 19 perform processing denoted by symbols (1) through (4).

Next, with reference to Fig. 3, operations and the processing method among the three parties shown in Fig. 2 will be described more in detail.

Referring to Fig. 3, when the user loads a desired disc into the information playback apparatus 1 and specifies the start of playback, the decoder unit 6 in the information playback apparatus 1 decodes the overhead data DLL, and in Step S1, the automatic URL link destination correcting apparatus 12a obtains the overhead data DLL and creates a database by storing the overhead data DLL in the flash ROM 13 or the SDRAM 14.

Further, in Step S2, the automatic URL link destination correcting apparatus 12a accesses the URL managing server 18 based on the pre-set access information.

When this access is made, besides address data Dadr indicating the location of the automatic URL link destination correcting apparatus 12a itself (that is, the location of the information playback apparatus 1 into which the disc is loaded), at least one of the URL data DURL and the site identifying data Did or both of the URL data DURL and the site identifying data Did are sent to the URL managing server 18 as argument data Dsch.

In short, in Step S2, the automatic URL link destination correcting apparatus 12a performs the processing denoted by the symbol (1) in Fig. 2. Assume that the URL data DURL designates the Web site 19 shown in Fig. 2, then at least one of the URL data DURL designating the location of the Web site 19 and the site identifying data Did related to the Web site 19 is sent to the URL managing server 18 as the argument data Dsch together with the address data Dadr.

Then, in Step S3, the URL managing server 18 receives the argument data Dsch, and in Step S4, it further checks whether the Web site 19 designated by the URL data DURL or the identifying data Did contained in the argument data Dsch is present on the Internet. When the presence is not confirmed, the URL managing service 18 searches through the URL database for a URL indicating the new location where it has been moved.

In other words, assume that the URL of the Web site 19 designated by the argument data Dsch has been moved to a new location, the URL managing server 18 searches for the URL indicating the new location through the URL database based on the URL data DURL or the site identifying data Did before the URL was moved, and judges that the URL of the Web site 19 needs to be corrected to the updated URL indicating the new location and obtained through this search.

Then, the URL managing server 18 performs predetermined return processing with respect to the automatic URL link destination correcting apparatus 12a in Step S5. In short, the URL managing server 18 performs the processing indicated by the symbol (2) in Fig. 2.

When the URL of the Web site 19 is not moved, the URL managing server 18 returns the check result informing that the argument data Dsch is valid data to the automatic URL link destination correcting apparatus 12a according to the address data Dadr.

When only the site identifying data Did is sent from the automatic URL link destination correcting apparatus 12a as the argument data Dsch in Step S3 described above, the URL managing server 18 returns not only the check result informing that the argument data Dsch is valid data, but also the URL of the Web site 19. When the URL data DURL of the Web site 19 is contained in the argument data Dsch sent from the automatic URL link destination correcting apparatus 12a in Step S3 described above, it means the automatic URL link destination correcting apparatus 12a has already obtained the URL data DURL of the Web site 19, and therefore, the URL managing server 18 returns only the check result informing that the argument data Dsch is valid data.

On the other hand, when the URL of the Web site 19 has been moved to a new location, the URL managing server 18 returns the check result informing that the argument data Dsch is invalid and the updated URL data DURL' designating the URL indicating the new location (that is, the updated URL of the Web site 19) to the automatic URL link destination correcting apparatus 12a according to the address data Dadr.

The automatic URL link destination correcting apparatus 12a receives the data returned from the URL managing server 18 in Step S6, and in subsequent Step S7, it prepares for an access to the Web site 19.

When the automatic URL link destination correcting apparatus 12a receives the check result informing that the argument data Dsch is valid data, it sets the overhead data DLL obtained from the disc in the Web browser. In other words, when the URL data DURL alone is contained in the overhead data DLL, the URL data DURL is set in the Web browser.

When the identifying data Did alone is contained in the overhead data DLL, the URL data of the Web site 19 returned from the URL managing server 18 is set in the Web browser.

When both the URL data DURL and the identifying data Did are contained in the overhead data DLL, the URL data DURL is set in the Web browser.

On the other hand, when the automatic URL link destination correcting apparatus 12a receives the updated URL data DURL' from the URL managing server 18, it stores the updated URL data DURL' in the flash ROM 13 or the SDRAM 14 in correspondence with the Web site 19 to write the updated URL data DURL' over the URL data DURL before the URL was moved, and sets the updated URL data DURL' in the Web browser.

Because the updated URL data DURL' is stored in the flash ROM 13 or the SDRAM 14, when the user wishes to access the desired Web site 19 by manipulating the manipulation unit 16 by himself/herself without loading the disc later, he/she can access the desired Web site 19 based on the latest URL stored in the flash ROM 13 or the SDRAM 14.

When the automatic URL link destination correcting apparatus 12a has set the valid URL of the Web site 19 in the Web browser as described above, in subsequent Step S8, it accesses the Web site 19 based on the valid URL and sends the address data Dadr and the related information specifying data Dacp. In short, the automatic URL link destination correcting apparatus 12a performs the processing denoted by the symbol (3) in Fig. 2.

Then, upon receipt of the related information specifying data Dacp sent from the automatic URL link destination correcting apparatus 12a (Step S9), the Web site 19 prepares related information (information related to titles of the songs recorded in the disc and the name of the artist, for example, schedules of upcoming concerts and profile of the artist) corresponding to the related information specifying data Dacp (Step S10), and distributes the prepared related information to the automatic URL link destination correcting apparatus 12a according to the address data Dadr. In short, the Web site 19 performs the processing denoted by the symbol (4) in Fig. 2.

Then, in Step S12, upon receipt of the distributed related information, the automatic URL link destination correcting apparatus 12a stores the related information in the flash ROM 13 or the SDRAM 14, while it outputs the related information to the data decompression unit 8 and further to the sound output terminal 10 through the audio output unit 9 and to the video output terminal 11, so that the related information is presented to the user as it is played from the speaker or displayed on the monitor.

Having received all the distributed related information, the automatic URL link destination correcting apparatus 12a ends the communication processing, and proceeds to processing, such as processing to play the disc again, according to the user's instruction.

As has been described, according to the automatic URL link destination correcting apparatus 12a and the automatic URL link destination correcting system of the embodiment, when an information recording medium (disc) , such as a CD and a DVD, having recorded the contents, such as music, and the overhead data DLL needed for distribution of the related information about the contents is played, the automatic URL link destination correcting apparatus 12a obtains the overhead data DLL, and sends the URL data DURL or the site identifying data Did contained in the overhead data DLL to the URL managing server 18 as the argument data Dsch. When the URL designated by the URL data DURL or the site identifying data Did has been moved to a new location, the URL managing server 18 returns the updated URL data DURL' designating the URL indicating the new location. The automatic URL link destination correcting apparatus 12a accesses the Web site 19 based on the URL data DURL when the URL is not moved and based on the updated URL data DURL' when the URL has been moved, and receives the related information distributed from the Web site 19. Consequently, the user can always access a desired Web site 19 based on the latest valid URL.

When the URL of a given Web site 19 has been moved to a new location, the URL is automatically updated to the URL indicating the new location. Hence, the user can always access a desired Web site 19 based on the latest valid URL and obtain the related information about the disc without any special manipulation.

The aforementioned URL managing server 18 may be a portal site providing a search service or the like.

In this case, as a modification of the embodiment, portal site URL data Dpor designating the URL of the Web site 19 to which is requested distribution of the aforementioned related information is contained in the overhead data DLL and pre-recorded in an information recording medium, such as a CD and a DVD.

When the information recording medium is played, the automatic URL link destination correcting apparatus 12a obtains the overhead data DLL, and accesses the portal site based on the portal site URL data Dpor. When this access is made, the automatic URL link destination correcting apparatus 12a sends the argument data Dsch (the aforementioned URL data DURL or the site identifying data Did) correlated with the URL data in the portal site in advance.

Upon receipt of the aforementioned argument data Dsch, the portal site returns the latest updated URL data DURL" designating the latest URL of the Web site 19 corresponding to the argument data Dsch to the automatic URL link destination correcting apparatus 12a.

Then, the automatic URL link destination correcting apparatus 12a accesses the Web site 19 based on the updated URL data DURL", and when this access is made, it sends the address data Dadr and the related information specifying data Dacp and thereby requests the related information corresponding to the related information specifying data Dacp. The automatic URL link destination correcting apparatus 12a thus receives and obtains the related information distributed from the Web site 19.

Further, the embodiment may be modified to a configuration as follows.

That is, upon receipt of the overhead data DLL, the automatic URL link destination correcting apparatus 12a sends the aforementioned portal site the related information specifying data Dacp in addition to the aforementioned argument data Dsch and address data Dadr. Then, instead of causing the portal site to return the latest URL data DURL" of the Web site, it causes the portal site to access the Web site 19 directly based on the latest URL data DURL" and to send the address data Dadr and the related information specifying data Dacp to the Web site 19.

This causes the Web site 19 to distribute the related information corresponding to the related information specifying data Dacp according to the address data Dadr, and the automatic URL link destination correcting apparatus 12a thus receives and obtains the distributed related information.

In other words, the automatic URL link destination correcting apparatus 12a does not access the Web site 19 based on the latest URL data DURL" by itself, but causes the portal site to access the Web site 19 based on the latest URL data DURL" on its behalf.

In the embodiment including the modifications described as above, as shown in the flowchart of Fig. 3, when the automatic URL link destination correcting apparatus 12a obtains the overhead data DLL (see Step S1), it inevitably accesses the URL managing server 18 or the portal site first (see Step S2). However, the invention is not limited to this configuration.

In other words, in still another modification of the embodiment, upon receipt of the overhead data DLL in Step S1 the automatic URL link destination correcting apparatus 12a may attempt to access the Web site 19 based on the URL data DURL contained in the overhead data DLL first, so that only when it failed to make an access, it proceeds to Step S2 to access the URL managing server (or portal site) 18.

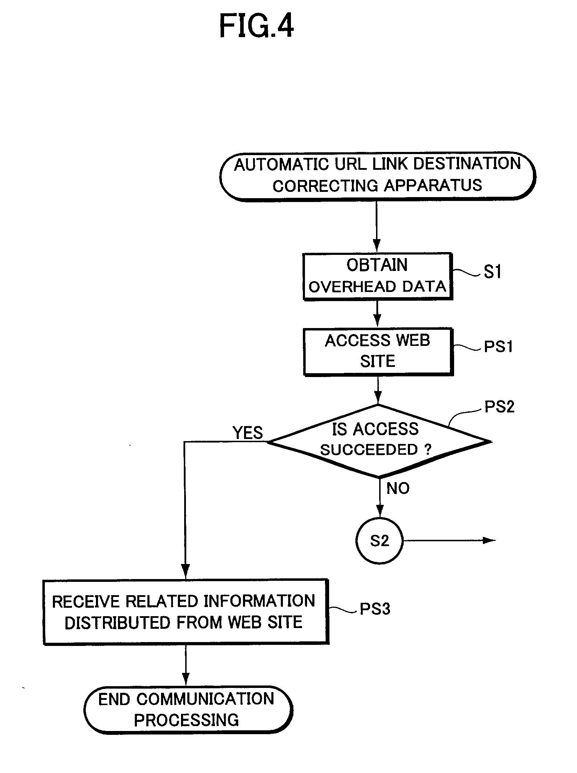

To be more specific, as detailed by a flowchart of Fig. 4, Step PS1 for making an attempt to access the Web site 19 and Step PS2 for judging whether it succeeded or failed to make an access may be provided between Step S1 an Step S2. In the flowchart of Fig. 4, the identical or equivalent steps are labeled with the same reference numerals with respect to the flowchart of Fig. 3.

In this case, in Step PS1, the automatic URL link destination correcting apparatus 12a attempts to access the Web site based on the URL data DURL of the Web site contained in the overhead data DLL, and it sends its own address data Dadr and the related information specifying data Dacp to the Web site when this attempt is made.

Then, in Step PS2, when a notice of error, such as "access denied", is returned from the Web site, it judges that it failed tomake an access to the Web site (judged as "NO"). When no response is returned from the Web site within a predetermined time, it also judges that it failed to make an access to the Web site.

When a notice of error is received or no response is received as described above, the flow proceeds to Step S2, where the automatic URL link destination correcting apparatus 12a accesses the URL managing server (or portal site) 18, and thereafter performs the processing described with reference to Fig. 3, and obtains the related information distributed from the Web site.

On the other hand, when the automatic URL link destination correcting apparatus 12a attempts to access the Web site in the aforementioned Step PS1 and receives no notice of error, and instead, the related information requested by the related information specifying data Dacp is returned from the Web site within a predetermined time, it judges that it succeeded to make an access (judged as "YES") in Step SP2. Then, it receives the related information in Step PS3 similar to Step S12 described above. When all the related information has been received, the communication processing is terminated.

According to this modification, when the automatic URL link destination correcting apparatus 12a succeeded to access the Web site, it does not have to access the URL managing server (or portal site) 18. Hence, a quicker access can be made to a Web site whose URL is not moved to a new location, and the related information can be obtained speedily. Even when it failed to access the Web site, because an access to the Web site is ensured by the URL managing server 18 or the portal site, it is possible to provide the user with the related information in a reliable manner.

Furthermore, the embodiment including the foregoing modifications described the automatic URL link destination correcting apparatus 12a incorporated in the information playback apparatus 1. However, the automatic URL link destination correcting apparatus 12a and the information playback apparatus 1 may be provided separately and connected to each other.

Also, the aforementioned automatic URL link destination correcting apparatus 12a performs control in automatically correcting the link destination of the URL by running a pre-installed certain system program on the microprocessor (MPU) provided in the system controller 12.

However, the invention is not limited to the configuration as above. A computer program causing a computer to perform the aforementioned function of the automatic URL link destination correcting apparatus, that is, to control the computer to automatically correct the link destination of the URL, may be prepared as an independent automatic URL link destination correcting program, and this program may be distributed from a Web site or the URL managing server or the portal site to be downloaded to the system controller 12 provided in an information playback apparatus with communications capability through a communications network, such as the Internet.

Alternatively, the automatic URL link destination correcting program may be pre-recorded in an information recording medium, such as a CD or a DVD, and provided to the user or the like, so that it is installed in the system controller 12 when the information recording medium is played.

Also, the above description described the information playback apparatus 1 as an apparatus for exclusive-use, such as a CD player or a DVD player. However, the invention is not limited to an apparatus for exclusive-use. The aforementioned automatic URL link destination correcting program may be downloaded or installed in a personal computer (PC) equipped with a drive unit for playing a CD or a DVD to furnish the personal computer (PC) with the similar function as that of the information playback apparatus 1.

As has been explained, according to the automatic URL link destination correcting system, the automatic URL link destination correcting apparatus, the method of automatically correcting a URL link destination, and the automatic URL link destination correcting program of the invention, when an access is made to a Web site based on the information recorded in the information recording medium, the URL data designating the URL of the Web site or the site identifying data related to the Web site recorded in the information recording medium is sent to the URL managing means, and when the URL has been moved to a new location, the updated URL data is returned. Hence, even when the URL has been moved to a new location, an access to the Web site can be always made automatically based on the valid URL.

Also, the URL data designating the URL of the Web site or the site identifying data related to the Web site recorded in the information recording medium is sent to the URL managing means, and the URL managing means is caused to access the Web site based on the updated URL data when the URL has been moved to a new location. Hence, even when the URL has been moved to a new location, an access to the Web site can be always made automatically based on the valid URL.

Also, before the URL data designating the URL of the Web site or the site identifying data related to the Web site recorded in the information recording medium is sent to the URL managing means, an attempt is made to access the Web site based on the URL data first, and only when an access fails, the URL data designating the URL of the Web site or the site identifying data related to the Web site recorded in the information recording medium is sent to the URL managing means. Hence, an access to the Web site can be made speedily in a reliable manner.

While there has been described what are at present considered to be preferred embodiments of the present invention, it will be understood that various modifications may be made thereto, and it is intended that the appended claims cover all such modifications as fall within the true spirit and scope of the invention.

## Claims

1. An automatic URL link destination correcting system for accessing a Web site (19) based on information recorded in an information recording medium (DISC), said system comprising:
URL managing means (18) having a database for managing URLs of Web sites (19); and automatic URL link destination correcting means (12a) for obtaining one of URL data designating a URL of a Web site (19) and site identifying data related to the Web site (19), all recorded in said information recording medium (DISC), and sending the one of the URL data and the site identifying data to said URL managing means (18),
wherein:
upon receipt of the one of the URL data and the site identifying data from said automatic URL link destination correcting means (12a), said URL managing means (18) judges whether the URL of the Web site (19) corresponding to the one of the URL data and the site identifying data has been moved to a new location by searching through said database, and upon judging that the URL of the Web site (19) has been moved to the new location, returns updated URL data designating a URL indicating the new location to said automatic URL link destination correcting means (12a); and
said automatic URL link destination correcting means (12a) accesses the Web site (19) based on the updated URL data returned from said URL managing means (18).

2. An automatic URL link destination correcting system for accessing a Web site (19) based on information recorded in an information recording medium (DISC), said system comprising:
URL managing means (18) having a database for managing URLs of Web sites (19); and
automatic URL link destination correcting means (12a) for obtaining one of URL data designating a URL of a Web site (19) and site identifying data related to the Web site (19), all recorded in said information recording medium (DISC), and sending the one of the URL data and the site identifying data to said URL managing means (18),
wherein:
upon receipt of the one of the URL data and the site identifying data from said automatic URL link destination correcting means (12a), said URL managing means (18) judges whether the URL of the Web site (19) corresponding to the one of the URL data and the site identifying data has been moved to a new location by searching through said database, and upon judging that the URL of the Web site (19) has been moved to the new location, accesses the Web site (19) based on updated URL data designating a URL indicating the new location to notify the Web site (19) of an access request from said automatic URL link destination correcting means (12a).

3. The automatic URL link destination correcting system according to claim 1 or 2, wherein:
upon obtaining the one of the URL data and the site identifying data recorded in said information recording medium (DISC), said automatic URL link destination correcting means 12a attempts to access the Web site (19) based on the URL data before sending the one of the URL data and the site identifying data to said URL managing means (18), and when an access to the Web site (19) fails, sends the one of the URL data and the site identifying data to said URL managing means (18).

4. An automatic URL link destination correcting apparatus for accessing a Web site (19) based on information recorded in an information recording medium (DISC), said apparatus comprising:
control means (12) for obtaining one of URL data designating a URL of a Web site (19) and site identifying data related to the Web site, all recorded in said information recording medium (DISC) , sending the one of the URL data and the site identifying data to URL managing means (18) having a database for managing URLs of Web sites (19), and causing said URL managing means (18) to judge whether the URL of the Web site (19) corresponding to the one of the URL data and the site identifying data has been moved to a new location by a search through said database, and upon judging that the URL of the Web site (19) has been moved to the new location, to return updated URL data designating a URL indicating the new location,
wherein said control means (12) accesses the Web site (19) based on the updated URL data returned from said URL managing means (18).

5. An automatic URL link destination correcting apparatus for accessing a Web site (19) based on information recorded in an information recording medium (DISC), said apparatus comprising:
control means (12) for obtaining one of URL data designating a URL of a Web site (19) and site identifying data related to the Web site, all recorded in said information recording medium, and sending the one of the URL data and the site identifying data to URL managing means (18) having a database for managing URLs of Web sites (19), wherein
said control means (12) causes said URL managing means (18) to judge whether the URL of the Web site (19) corresponding to the one of the URL data and the site identifying data has been moved to a new location by a search through said database, and upon judging that the URL of the Web site (19) has been moved to the new location, to access the Web site (19) based on updated URL data designating a URL indicating the new location to notify the Web site of an access request from said control means (12).

6. The automatic URL link destination correcting apparatus according to claim 4 or 5, wherein:
upon obtaining the one of the URL data and the site identifying data recorded in said information recording medium, said control means (12) attempts to access the Web site based on the URL data before sending the one of the URL data and the site identifying data to said URL managing means (18), and when an access to the Web site (19) fails, sends the one of the URL data and the site identifying data to said URL managing means (18).

7. A method of automatically correcting a URL link destination for accessing a Web site (19) based on information recorded in an information recording medium (DISC), said method comprising:
a first step of sending one of URL data designating a URL of a Web site (19) and site identifying data related to the Web site, all recorded in said information recording medium, to URL managing means having a database for managing URLs of Web sites (19);
a second step of causing said URL managing means (18) to judge whether the URL of the Web site (19) corresponding to the URL data or the site identifying data has been moved to a new location by a search through said database, and upon judging that the URL of the Web site (19) has been moved to the new location, to search for updated URL data designating a URL indicating the new location; and
a third step of accessing the Web site (19) based on the updated URL data searched by said URL managing means (18).

8. A method of automatically correcting a URL link destination for accessing a Web site (18) based on information recorded in an information recording medium (DISC), said method comprising:
a first step of sending one of URL data designating a URL of a Web site (19) and site identifying data related to the Web site (19), all recorded in said information recording medium, to URL managing means (18) having a database for managing URLs of Web sites (19);
a second step of causing said URL managing means (18) to judge whether the URL of the Web site (19) corresponding to the URL data or the site identifying data has been moved to a new location by a search through said database, and upon judging that the URL of the Web site (19) has been moved to the new location, to search for updated URL data designating a URL indicating the new location; and
a third step of causing said URL managing means (18) to access the Web site (18) based on the searched updated URL data.

9. The method of automatically correcting a URL link destination according to Claim 7 or 8, wherein:
an attempt is made to access the Web site (19) based on the URL data prior to said first step, and when an access to the Web site (19) fails, said first step is initiated.

10. An automatic URL link destination correcting program for causing a computer to access a Web site (19) based on information recorded in an information recording medium (DISC), said program causing said computer to perform:
a first procedural step of sending one of URL data designating a URL of a Web site (19) and site identifying data related to the Web site (19), all recorded in said information recording medium (DISC), to URL managing means (18) having a database for managing URLs of Web sites (19);
a second procedural step of causing said URL managing means (18) to judge whether the URL of the Web site (19) corresponding to the URL data or the site identifying data has been moved to a new location by a search through said database, and upon judging that the URL of the Web site (19) has been moved to the new location, to search for updated URL data designating a URL indicating the new location; and
a third procedural step of accessing the Web site (19) based on the updated URL data searched by said URL managing means (18).

11. An automatic URL link destination correcting program for causing a computer to access a Web site (19) based on information recorded in an information recording medium (DISC), said program causing said computer to perform:
a first procedural step of sending one of URL data designating a URL of a Web site (19) and site identifying data related to the Web site (19), all recorded in said information recording medium (DISC),to URL managing means (18) having a database for managing URLs of Web sites;
a second procedural step of causing said URL managing means (18) to judge whether the URL of the Web site (19) corresponding to the URL data or the site identifying data has been moved to a new location by a search through said database, and upon judging that the URL of the Web site (19) has been moved to the new location, to search for updated URL data designating a URL indicating the new location; and
a third procedural step of causing said URL managing means (18) to access the Web site (19) based on the searched updated URL data.

12. The automatic URL link destination correcting program according to claim 10 or 11, said program causing said computer to further perform:
a procedural step of making an attempt to access the Web site (19) based on the URL data prior to said first procedural step, and, when an access to the Web site (19) fails, initiating said first procedural step.
